# EUROPEAN PATENT APPLICATION

(11) **EP 4 472 228 A1**
(43) Date of publication of application: **04.12.2024**
(21) Application number: 24178155.8
(22) Date of filing: 27.05.2024
(51) Int. Cl.: H04N 25/583, H04N 25/773

(54) **PHOTOELECTRIC CONVERSION DEVICE, MOVABLE APPARATUS, PHOTOELECTRIC CONVERSION METHOD, AND STORAGE MEDIUM**

(30) Priority: 30.05.2023 JP 2023088746
(71) Applicant: CANON KABUSHIKI KAISHA, Tokyo 146-8501 (JP)
(72) Inventor: SAITO, Tadanori, Tokyo, 146-8501 (JP); KIMURA, Takayuki, Tokyo, 146-8501 (JP); FUJIMORI, Soya, Tokyo, 146-8501 (JP); NABESHIMA, Takuya, Tokyo, 146-8501 (JP); YOKOYAMA, Junya, Tokyo, 146-8501 (JP)
(74) Representative: TBK

(57) **Abstract**

A photoelectric conversion device includes: a plurality of pixels each including a sensor portion configured to emit a pulse corresponding to an incident photon, a counter configured to count the number of pulses, and a memory configured to store a count value of the counter; and a control unit configured to generate a signal based on a difference in the count value of the counter between at a start timing and at an end timing of an accumulation period and to output the signal generated in a first accumulation period between an end of the first accumulation period and an end of a second accumulation period, the first accumulation period and the second accumulation period being included in a full frame period, the first accumulation period being shorter than the second accumulation period.

## Description

### BACKGROUND OF THE INVENTION

### Field of the Invention

The present invention relates to a photoelectric conversion device, a movable apparatus, a photoelectric conversion method, and a storage medium.

### Description of the Related Art

In recent years, a photoelectric conversion device that digitally counts the number of photons incident on an avalanche photodiode (APD) and outputs the counted value as a photoelectrically converted digital signal from pixels has been developed.

Japanese Patent No. 7223070 discloses a configuration of a photoelectric conversion device including APDs that can output a plurality of images of which accumulation periods overlap each other and thus enable consecutive imaging even at low illuminance.

However, in the configuration disclosed in Japanese Patent No. 7223070, for example, when an imaging device for an onboard camera installed in a movable apparatus is assumed, a recognition process is performed frame by frame in normal sensor driving, and thus it cannot be helped that the recognition process is performed every 33.3 ms, for example, in a case of 30 fps. Accordingly, in the onboard camera, if an object jumps in immediately after a frame has changed, the recognition process cannot be performed until the current frame ends.

Many onboard cameras have an accumulation period equal to or greater than a predetermined period (11 ms) to curb flickering due to traffic signals and capture a bright image particularly by lengthening the accumulation period at low illuminance. However, since the accumulation is long, subject blurring occurs in an object moving fast and thus a recognition rate thereof is lowered.

### SUMMARY OF THE INVENTION

According to one aspect of the present invention, there is provided a photoelectric conversion device including: a plurality of pixels each including a sensor portion configured to emit a pulse corresponding to an incident photon, a counter configured to count the number of pulses, and a memory configured to store a count value of the counter; one or more memories storing instructions; and one or more processors executing the instructions to generate a signal based on a difference in the count value of the counter between at a start timing and at an end timing of an accumulation period and to output the signal generated in a first accumulation period between an end of the first accumulation period and an end of a second accumulation period, the first accumulation period and the second accumulation period being included in a full frame period, the first accumulation period being shorter than the second accumulation period.

Further features of the present invention will become apparent from the following description of embodiments with reference to the attached drawings.

### BRIEF DESCRIPTION OF THE DRAWINGS

Fig. 1 is a diagram illustrating an example of a configuration of a photoelectric conversion device according to an embodiment of the present invention.
Fig. 2 is a diagram illustrating an example of a configuration of a sensor board 11.
Fig. 3 is a diagram illustrating an example of a configuration of a circuit board 21.
Fig. 4 is a diagram illustrating an equivalent circuit of a pixel 101 and a signal processing circuit 103 corresponding to the pixel 101 in Figs. 2 and 3.
Fig. 5 is a diagram schematically illustrating a relationship between an operation of an APD 201 and an output signal.
Fig. 6 is a functional block diagram of a photoelectric conversion device 600 and a movable apparatus 700 according to the embodiment.
Fig. 7 is a diagram illustrating a photoelectric conversion method that is performed by a camera control unit 605 according to the embodiment.
Fig. 8 is a diagram illustrating an example of images of a plurality of divided frames.
Fig. 9 is a diagram illustrating a relationship between a memory circuit and a buffer according to the embodiment.
Fig. 10 is a flowchart specifically illustrating a driving example of the photoelectric conversion device according to the embodiment.
Fig. 11 is a flowchart subsequent to the flowchart illustrated in Fig. 10.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

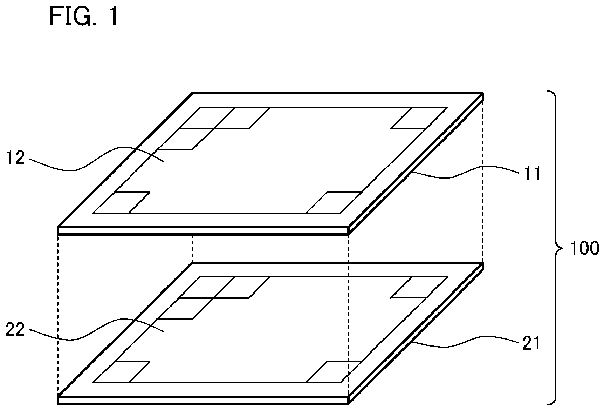

Fig. 1 is a diagram illustrating an example of a configuration of a photoelectric conversion device according to an embodiment of the present invention. In the following description, a photoelectric conversion device 100 is, for example, a photoelectric conversion device with a so-called stacked structure in which two boards including a sensor board 11 and a circuit board 21 are stacked and electrically connected.

However, a so-called non-stacked structure in which elements included in the sensor board and elements included in the circuit board are provided in a common semiconductor layer may be employed. The sensor board 11 includes a pixel area 12. The circuit board 21 includes a circuit area 22 for processing a signal detected from the pixel area 12.

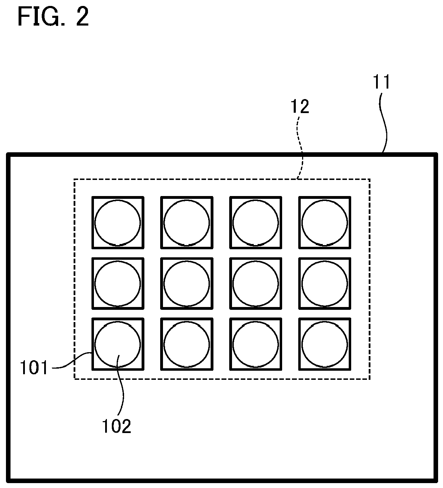

Fig. 2 is a diagram illustrating an example of a configuration of the sensor board 11. The pixel area 12 of the sensor board 11 includes a plurality of pixels 101 which are arranged two-dimensionally in directions of a plurality of rows and a plurality of columns. Each pixel 101 includes a photoelectric conversion element 102 including an avalanche photodiode (hereinafter referred to as APD).

Here, the photoelectric conversion element 102 serves as a sensor portion for emitting a pulse corresponding to a photon reception frequency. The number of rows and the number of columns in a pixel array constituting the pixel area 12 are not particularly limited.

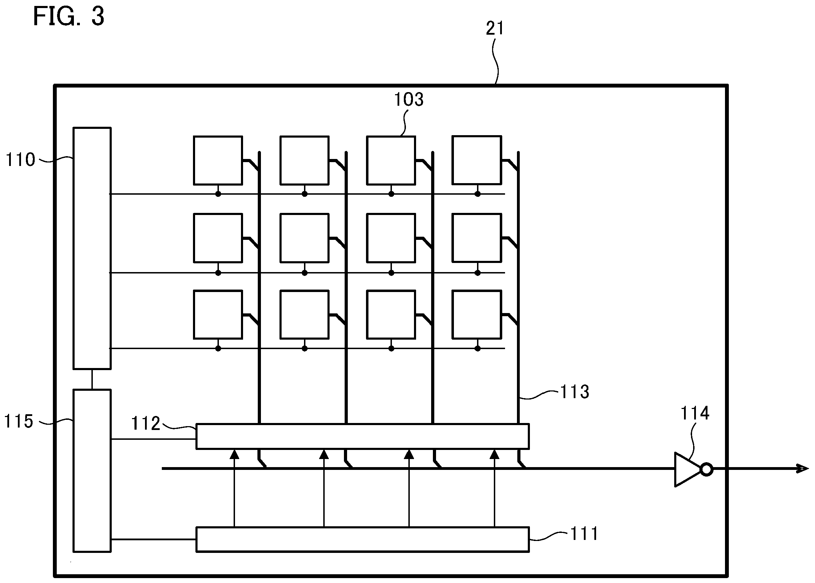

Fig. 3 is a diagram illustrating an example of a configuration of the circuit board 21. The circuit board 21 includes a signal processing circuit 103 for processing electric charges photoelectrically converted by the corresponding photoelectric conversion element 102 in Fig. 2, a reading circuit 112, a control pulse generator 115, a horizontal scanning circuit 111, a vertical signal line 113, a vertical scanning circuit 110, and an output circuit 114.

The vertical scanning circuit 110 receives a control pulse supplied from the control pulse generator 115 and sequentially supplies the control pulse to a plurality of pixels arranged in the row direction. A logic circuit such as a shift register or an address decoder is used for the vertical scanning circuit 110.

A signal output from the photoelectric conversion element 102 of each pixel is processed by the corresponding signal processing circuit 103. The signal processing circuit 103 is provided with a counter, a memory, or the like, and a digital value is stored in the memory. The horizontal scanning circuit 111 inputs a control pulse for sequentially selecting a column to the signal processing circuits 103 to read signals from the memories of the pixels storing a digital signal.

Signals from the signal processing circuits 103 of the pixels in the row selected by the vertical scanning circuit 110 are output to the vertical signal lines 113. The signals output to the vertical signal lines 113 are output to the outside of the photoelectric conversion device 100 via the reading circuit 112 and the output circuit 114. A plurality of buffers connected to the vertical signal lines 113 are incorporated into the reading circuit 112.

As illustrated in Figs. 2 and 3, a plurality of signal processing circuits 103 are arranged in an area overlapping the pixel area 12 in a plan view. The vertical scanning circuit 110, the horizontal scanning circuit 111, the reading circuit 112, the output circuit 114, and the control pulse generator 115 are arranged to overlap between an end of the sensor board 11 and an end of the pixel area 12 in a plan view.

In other words, the sensor board 11 includes the pixel area 12 and a non-pixel area disposed around the pixel area 12. The vertical scanning circuit 110, the horizontal scanning circuit 111, the reading circuit 112, the output circuit 114, and the control pulse generator 115 are arranged in an area overlapping the non-pixel area in a plan view.

Arrangement of the vertical signal lines 113 and arrangement of the reading circuit 112 and the output circuit 114 are not limited to the example illustrated in Fig. 3. For example, the vertical signal lines 113 may be disposed to extend in the row direction, and the reading circuit 112 may be disposed forward in the extending direction of the vertical signal line 113. The signal processing circuit 103 does not have to be provided for each photoelectric conversion element, and there may be a configuration in which one signal processing circuit is shared by a plurality of photoelectric conversion elements and performs sequential signal processing thereon.

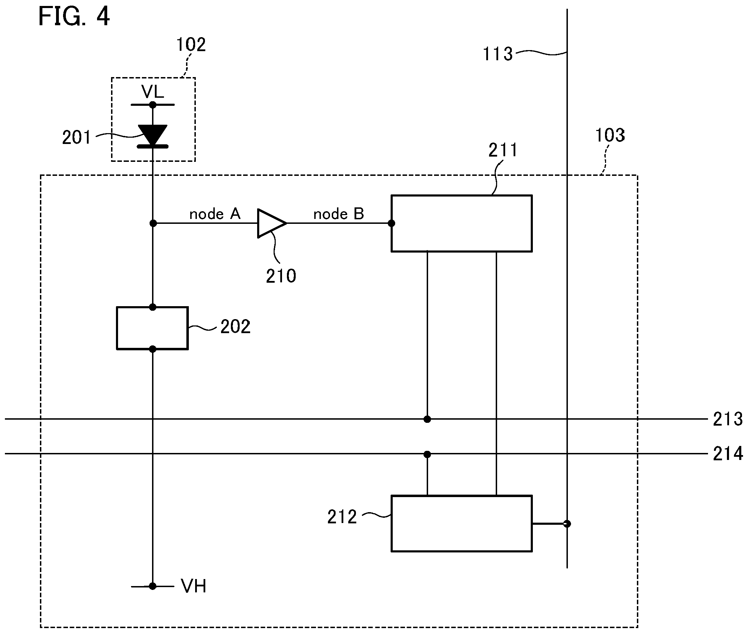

Fig. 4 is a diagram illustrating an equivalent circuit of a pixel 101 and a signal processing circuit 103 corresponding to the pixel 101 in Figs. 2 and 3.

The APD 201 included in each photoelectric conversion element 102 generates electric charge pairs corresponding to incident light through photoelectric conversion. One node of two nodes of the APD 201 is connected to a power supply line for supplying a drive voltage VL (a first voltage). The other node of the two nodes of the APD 201 is connected to a power supply line for supplying a drive voltage VH (a second voltage) which is higher than the voltage VL.

In Fig. 4, the one node of the APD 201 is an anode, and the other node of the APD 201 is a cathode. The anode and the cathode of the APD 201 are supplied with a reverse bias voltage for allowing the APD 201 to perform an avalanche multiplication operation. By supplying this reverse bias voltage, electric charges generated by incident light causes avalanche multiplication, and an avalanche current is generated.

When the reverse bias voltage is supplied, there are a Geiger mode in which a voltage difference between the anode and the cathode is greater than a breakdown voltage and a linear mode in which the voltage difference between the anode and the cathode is a voltage difference close to the breakdown voltage or equal to or less than the breakdown voltage. The APD that operates in the Geiger mode is referred to as an SPAD. In the SPAD, for example, the voltage VL (the first voltage) is -30 V and the voltage VH (the second voltage) is 1 V.

The signal processing circuit 103 includes a quench element 202, a waveform shaping portion 210, a counter circuit 211, and a memory circuit 212. The quench element 202 is connected to the power supply line for supplying the drive voltage VH and one node of the anode and the cathode of the APD 201.

The quench element 202 serves as a load circuit (a quench circuit) at the time of multiplication of a signal through avalanche multiplication and has a function of curbing a voltage supplied to the APD 201 to curb the avalanche multiplication (a quench operation). The quench element 202 also has a function of returning the voltage supplied to the APD 201 to the drive voltage VH by causing a current corresponding to a voltage drop due to the quench operation to flow therein (a recharge operation).

In Fig. 4, an example in which the signal processing circuit 103 includes the waveform shaping portion 210, the counter circuit 211, and the memory circuit 212 in addition to the quench element 202 is illustrated.

The waveform shaping portion 210 shapes a voltage change of the cathode of the APD 201 which is acquired at the time of detection of photons and outputs a pulse signal. For example, an inverter circuit is used as the waveform shaping portion 210. In Fig. 4, one inverter is used as the waveform shaping portion 210, but a circuit in which a plurality of inverters are connected in series may be used or another circuit with a waveform shaping effect may be used.

The counter circuit 211 counts the number of pulses output from the waveform shaping portion 210 and stores the count value. When a control pulse RES is supplied via a drive line 213, a signal stored in the counter circuit 211 is reset. Here, the counter circuit 211 generates a signal based on a difference in the count value between at the start timing and at the end timing of the accumulation period.

The memory circuit 212 is supplied with a control pulse SEL from the vertical scanning circuit unit 110 illustrated in Fig. 3 via a drive line 214 in Fig. 4 (not illustrated in Fig. 3) to switch between electrical connection and disconnection between the counter circuit 211 and the vertical signal line 113. The memory circuit 212 serves as a memory for temporarily storing the count value of the counter and outputs an output signal from the counter circuit 211 of the corresponding pixel to the vertical signal line 113.

A switch such as a transistor may be provided between the quench element 202 and the APD 201 or between the photoelectric conversion element 102 and the signal processing circuit 103 to switch an electrical connection therebetween. Similarly, supply of the voltage VH or the voltage VL to the photoelectric conversion element 102 may be electrically switched using a switch such as a transistor.

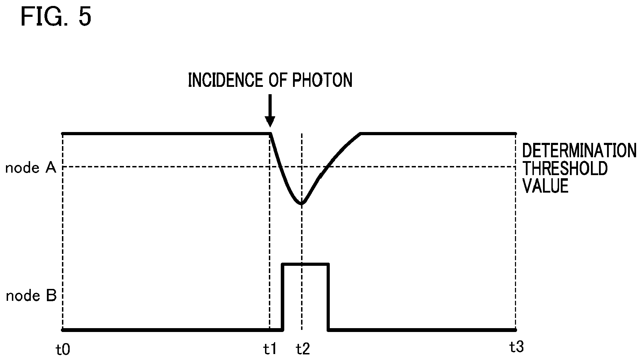

Fig. 5 is a diagram schematically illustrating a relationship between the operation of the APD 201 and the output signal. An input side of the waveform shaping portion 210 is defined as node A and an output side thereof is defined as node B. From time t0 to time t1, a potential difference of VH-VL is applied to the APD 201. When photons are incident on the APD 201 at time t1, avalanche multiplication occurs in the APD 201, an avalanche multiplication current flows in the quench element 202, and the voltage of node A drops.

When the voltage drop increases and the potential difference applied to the APD 201 decreases, the avalanche multiplication of the APD 201 stops as at time t2, and the voltage level of node A does not drop by a predetermined value or more.

Thereafter, between time t2 to time t3, a current for complementing for the voltage drop from the voltage VL flows in node A, and node A is corrected to the original potential level at time t3. At this time, a part in which an output waveform is exceeds a predetermined threshold value in node A is shaped by the waveform shaping portion 210, and a pulse signal is output to node B.

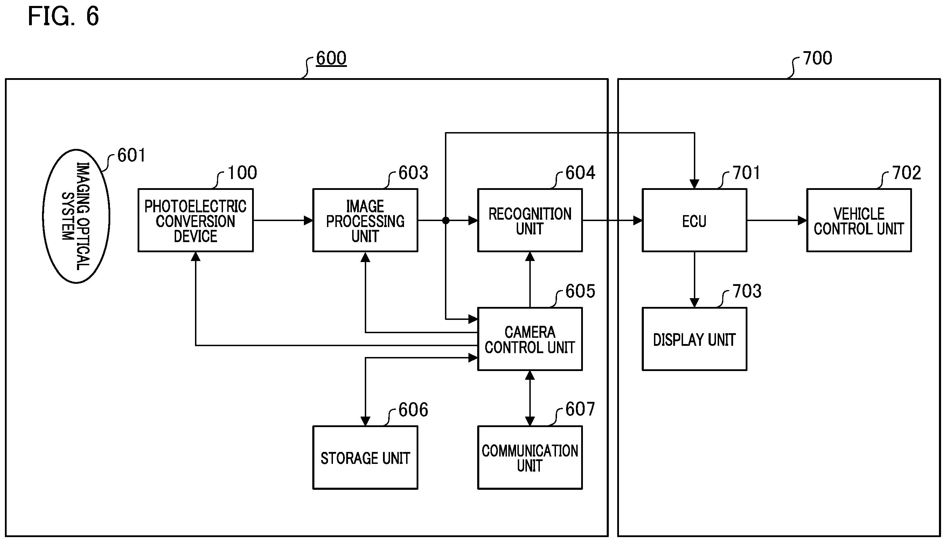

A photoelectric conversion device 600 and a movable apparatus 700 according to the embodiment will be described below. Fig. 6 is a functional block diagram of the photoelectric conversion device 600 and the movable apparatus 700 according to the embodiment. Some of functional blocks illustrated in Fig. 6 are realized by causing a computer (not illustrated) included in the photoelectric conversion device 600 and the movable apparatus 700 to execute a computer program stored in a memory which is a storage medium which is not illustrated.

However, some or all of the functional blocks may be realized by hardware. A dedicated circuit (ASIC), a processor (such as a reconfigurable processor or a DSP), or the like can be used as the hardware. The functional blocks illustrated in Fig. 6 may not be incorporated into the same housing and may be constituted by different devices connected to each other via a signal line.

The photoelectric conversion device 600 includes the photoelectric conversion device 100 described above with reference to Figs. 1 to 5, an imaging optical system 601, an image processing unit 603, a recognition unit 604, a camera control unit 605, a storage unit 606, and a communication unit 607. The photoelectric conversion device 100 includes avalanche photodiodes described above with reference to Figs., 1 to 5 for photoelectrically converting an optical image.

The photoelectric conversion device according to the embodiment is mounted in the movable apparatus 700, and a camera unit including a set of the imaging optical system 601 and the photoelectric conversion device 100 is configured to image, for example, at least one of a forward view, a rearward view, and a side view of the movable apparatus. A plurality of camera units may be provided in the movable apparatus 700.

The image processing unit 603 performs image processing such as black level correction, gamma curve adjustment, noise reduction, digital gain adjustment, de-mosaic processing, or data compression on an image signal acquired by the photoelectric conversion device 100 and generates a final image signal. When the photoelectric conversion device 100 includes on-chip color filters of RGB or the like, it is preferable that the image processing unit 603 perform processing such as white balance correction or color conversion.

An output of the image processing unit 603 is supplied to the recognition unit 604, an electronic control unit (ECU) 701 of the movable apparatus 700, and the camera control unit 605. The recognition unit 604 recognizes a nearby person, a nearby vehicle, or the like by performing image recognition based on the image signal and issues a warning according to necessity.

The present embodiment is based on an example in which the movable apparatus 700 is an automobile, but the movable apparatus may be any of an aircraft, a subway train, a ship, a drone, an AGV, and a robot as long as it is mobile.

The camera control unit 605 includes a CPU which is a computer and a memory which stores a computer program and controls the constituents of the photoelectric conversion device 600 by causing the CPU to execute the computer program stored in the memory.

The camera control unit 605 controls a length of an exposure period of each frame of the photoelectric conversion device 100, a timing of a control signal CLK, or the like, for example, via the control pulse generator of the photoelectric conversion device 100.

The storage unit 606 includes a recording medium such as a memory card or a hard disk and can store and read an image signal. The communication unit 607 includes a wireless or wired interface, outputs the generated image signal to the outside of the photoelectric conversion device 600, and receives various types of signals from the outside.

The ECU 701 includes a CPU which is a computer and a memory which stores a computer program and controls the constituents of the movable apparatus 700 by causing the CPU to execute the computer program stored in the memory.

An output of the ECU 701 is supplied to a vehicle control unit 702 and a display unit 703. The vehicle control unit 702 serves as a movement control unit configured to perform driving, stopping, direction control, and the like of a vehicle which is the movable apparatus on the basis of the output of the ECU 701. The display unit 703 includes a display device such as a liquid crystal device or an organic EL display and is mounted in the movable apparatus 700.

The display unit 703 displays an image acquired by the photoelectric conversion device 100 or various types of information on a traveling state of the vehicle or the like to a driver of the movable apparatus 700, for example, using a GUI on the basis of the output of the ECU 701.

The image processing unit 603, the recognition unit 604, and he like illustrated in Fig. 6 may not be mounted in the movable apparatus 700, but may be provided, for example, in an external terminal for remotely controlling the movable apparatus 700 or monitoring traveling of the movable apparatus, which is provided separately from the movable apparatus 700.

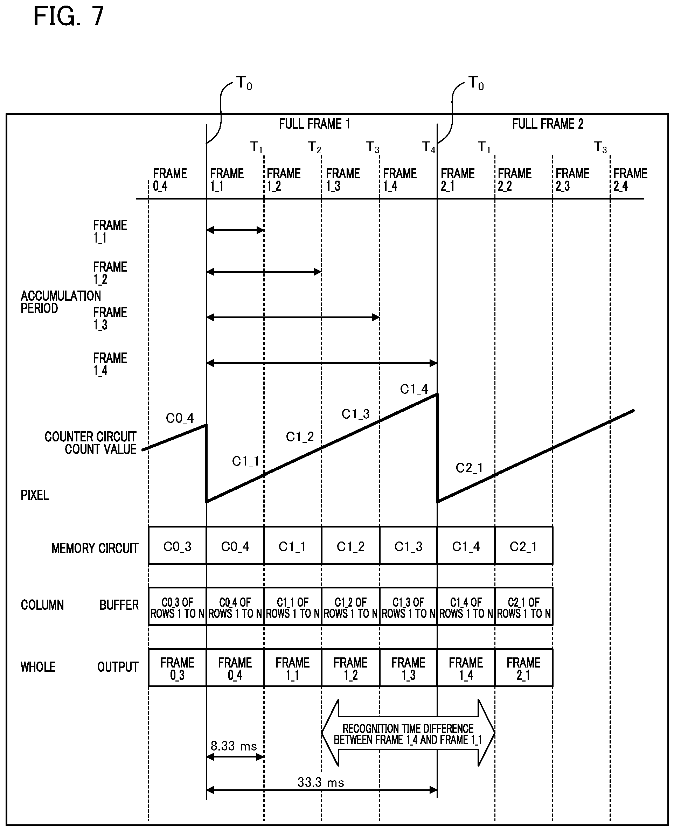

Fig. 7 is a diagram illustrating a photoelectric conversion method that is performed by the camera control unit 605 according to the embodiment. In the present embodiment, photoelectric conversion is periodically driven, for example, at 30 full frames/second. A frame corresponding to one vertical period of 33.3 ms is referred to as a full frame, and a quarter of the full frame is referred to as a frame.

That is, Full Fame 1 of from time T0 to time T12 is divided into frames 1_1, 1_2, 1_3, and 1_4 with an equal period (8.33 ms) as illustrated in Fig. 7.

The frame 1_1 includes an accumulation period (a photoelectric conversion period) of from start time T0 to time T1 in Full Frame 1, and the frame 1_2 includes an accumulation period of from time T0 to time T2. The frame 1_3 includes an accumulation period of from time T0 to time T3, and the frame 1_4 includes an accumulation period of from time T0 to time T4.

The counter circuit 211 is reset at time T0, and count values C1_1, C1_2, C1_3, and C1_4 are acquired from the counter circuit 211 at time T1 to time T4.

The count values C1_1, C1_2, C1_3, and C1_4 are temporarily stored in the memory circuit 212. Signals corresponding to one row which are temporarily stored in the memory circuit 212 are sequentially output from the photoelectric conversion device via the buffer of the reading circuit 112.

In this way, according to the present embodiment, signals accumulated in a period of the frame 1_1 are read from time T1 to time T2 and are rapidly processed by the recognition unit 604. Accordingly, it is possible to rapidly perform image recognition. Similarly, signals accumulated in periods of the frame 1_2, the frame 1_3, and the frame 1_4 are sequentially read from time T2 to time T3, from time T3 to T4, and from T4 to T1, and image recognition can be repeatedly performed thereon.

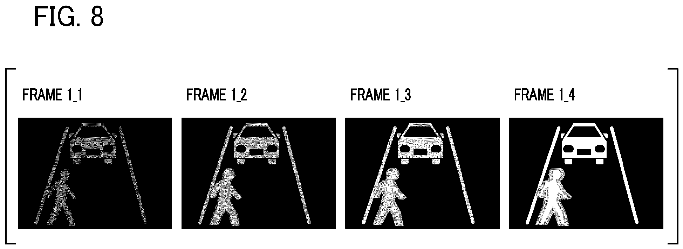

Fig. 8 is a diagram illustrating an example of images of a plurality of divided frames. As illustrated in Fig. 8, an image of the frame 1_1 is dark because the accumulation period is short, but has small subject blurring of a rushed-out person. On the other hand, the accumulation periods of the frame 1_2, the frame 1_3 and the frame 1_4 are longer in this order, and thus subject blurring are likely to occur in that order. Blurring is less likely to occur in a stopped vehicle or a white line, and contrast is more likely to be improved as the accumulation period becomes longer.

In this way, in the present embodiment, a first accumulation period and a second accumulation period are provided in a full frame, the first accumulation period is shorter than the second accumulation period, and control is performed such that a signal generated in the first accumulation period is output between an end of the first accumulation period and an end of the second accumulation period.

In the present embodiment, the first accumulation period and the second accumulation period overlap, and the first accumulation period and the second accumulation period start simultaneously. The end of the second accumulation period matches the end of the full frame, and the second accumulation period is an integer multiple of the first accumulation period.

Here, the second accumulation period does not have to be an integer multiple of the first accumulation period as long as the second accumulation period is longer than the first accumulation period (the first accumulation period is shorter than the second accumulation period) and the end of the second accumulation period is later than the end of the first accumulation period.

That is, an image with a short accumulation period and an image with a long accumulation period are generated, an end timing of the short accumulation period is set to be earlier than an end timing of the long accumulation period, and the images are output to the recognition unit in the subsequent stage immediately after the short accumulation period ends. Then, a subject is recognized on the basis of at least a signal generated in the first accumulation period. The recognition unit 604 recognizes a subject on the basis of at least the signal generated in the first accumulation period.

Accordingly, image recognition is possible only after a full frame elapses in the related art, but image recognition is possible after a quarter length of the full frame elapses in the shortest in the present embodiment. For example, when a movable apparatus is moving fast, an obstacle or the like can be rapidly recognized. Accordingly, quick braking or the like can be made to be possible. Alternatively, it is also possible to early avoid an obstacle.

An image with a long accumulation period can enhance contrast and thus can be used as a display image. That is, an image with a short accumulation period is suitable for rapid recognition of a subject, and an image with a long accumulation period is suitable for a display image. In this way, the display device according to the present embodiment displays signals generated at least in the second accumulation period as an image.

In the present embodiment, since the APDs are used, accumulated electric charges do not deteriorate due to reading unlike a CMOS sensor and thus the accumulation periods can be overlapped. Since there is no reading noise, original signals do not deteriorate even when reading is performed a plurality of times with one accumulation.

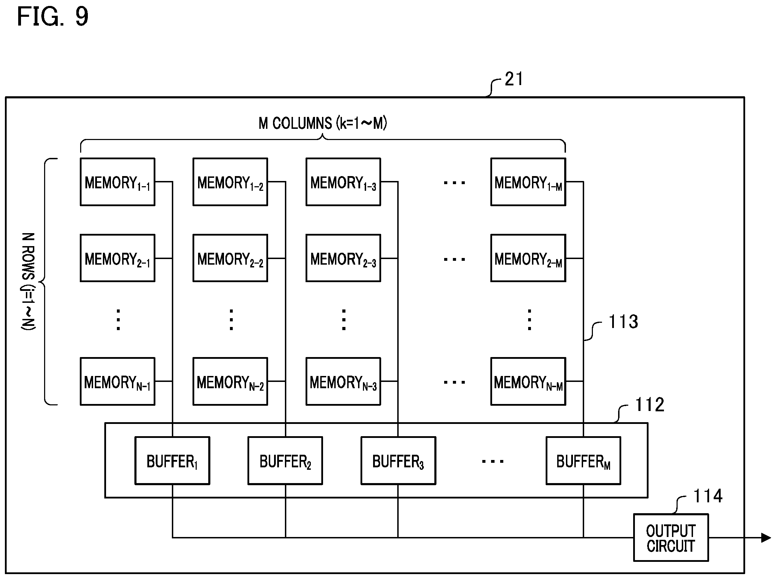

Fig. 9 is a diagram illustrating a relationship between a memory circuit and a buffer according to the embodiment. In Fig. 9, a state in which the memory circuits 212 in the signal processing circuits 103 illustrated in Fig. 3 are arranged in N rows and M columns is illustrated, and the memory circuits are referred to as memories 1-1 to N-M. Buffers 1 to M in Fig. 9 indicate the buffers included in the reading circuit 112 in Fig. 3. An output circuit 114 in Fig. 9 corresponds to the output circuit 114 in Fig. 3.

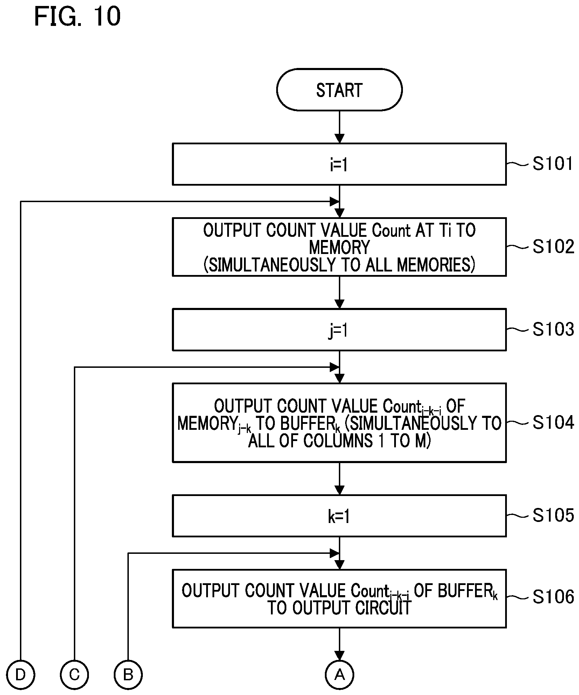

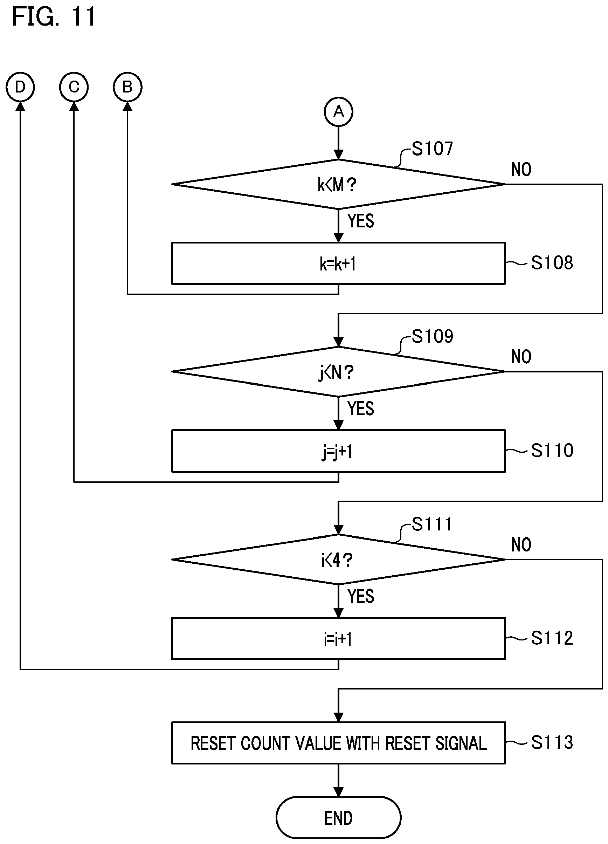

Fig. 10 is a flowchart illustrating details of a driving example of the photoelectric conversion device according to the embodiment, and Fig. 11 is a flowchart subsequent to the flowchart of Fig. 10. The operations of steps in the flowcharts illustrated in Figs. 10 and 11 are sequentially performed by causing a CPU or the like which is a computer in the camera control unit 605 to execute a computer program stored in a memory.

In Step S101 of Fig. 10, i=1 is set. Then, in Step S102, a count value Count in the counter circuit 211 at time Ti is output to the memory circuit 212. At this time, the count values are simultaneously output to all the memory circuits. This operation corresponds to the operation at time T1 in Fig. 7.

Then, in Step S103, j=1 is set. In Step S104, a count value Count(j-k-i) in the memory circuit j-k in Fig. 9 is output to the buffer. At this time, the count values are simultaneously output to the buffers in columns 1 to M. This operation corresponds to the operation of outputting the count values of the first row in Fig. 9 to the buffers.

Then, in Step S105, k=1 is set. In Step S106, the count value Count(j-k-i) of the buffer k is output to the output circuit 114. This operation corresponds to the operation of reading the signals of the buffer in the leftmost column in Fig. 9 from the output circuit.

Then, the operation flow proceeds to Step S107 of Fig. 11 via A, and it is determined whether k<M is satisfied in Step S107. When the determination result is YES, k is increased by 1 through k=k+1 in Step S108, and the operation flow returns to Step S106 via B to perform the operation of Step S106. This operation corresponds to the operation of reading signals of the leftmost second buffer in Fig. 9 from the output circuit.

When the determination result of Step S107 is NO, that is, when k=M is satisfied, it means that all the signals of the M-th buffer in Fig. 9 have been read from the output circuit, and then it is determined whether j<N is satisfied in Step S109. When the determination result of Step S109 is YES, j is increased by 1 through j=J+1 in Step S110, and then the operation flow returns to Step S104 via C. This corresponds to the operation of starting reading of the next row.

When the determination result of Step S109 is NO, it means that reading of all the rows has been completed, and thus it is determined whether j<4 is satisfied in Step S111. When the determination result of Step S111 is YES, i is increased by 1 through i=i+1, and the operation flow returns to Step S102 via D. This operation corresponds to the operation of starting reading at a next time T2.

When the determination result of Step Sill is NO, it means that reading at time T4 has been completed, and thus the counter circuit 211 is reset with a reset signal in Step S113. This operation corresponds to the operation of resetting the counter circuit 211 at time T4 in Fig. 7. In this way, signals accumulated in the photoelectric conversion device 100 can be sequentially read.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

For example, in the aforementioned embodiment, accumulation in a quarter full frame period in the shortest is performed, but the length of the shortest accumulation period may be changed to, for example, a 115 full frame period or a 1/3 full frame period according to recognition accuracy in the recognition unit 604. Alternatively, the length of the shortest accumulation period may be changed according to brightness of a subject.

Even when a reading period is set to the quarter full frame period, the counter circuit may be reset in the accumulation period of the frame 1_1 in Fig. 7 according to brightness of a subject, image recognition accuracy, or the like. As a result, a substantially accumulation period may be set to be shorter than the quarter full frame period.

Alternatively, the counter circuit may be temporarily reset at time T1 or the like in Fig. 7. As a result, the count value read at time T4 may be adjusted.

In addition, as a part or the whole of the control according to the embodiments, a computer program realizing the function of the embodiments described above may be supplied to the photoelectric conversion device or the like through a network or various storage media. Then, a computer (or a CPU, an MPU, or the like) of the photoelectric conversion device or the like may be configured to read and execute the program. In such a case, the program and the storage medium storing the program configure the present invention.

In addition, the present invention includes those realized using at least one processor or circuit configured to perform function of the embodiments explained above, for example. Dispersion processing may be performed using a plurality of processors.

This application claims the benefit of priority from Japanese Patent Application No. 2023-088746, filed on May 30, 2023, which is hereby incorporated by reference herein in its entirety.

## Claims

1. A photoelectric conversion device comprising:
a plurality of pixels each including:
a sensor portion configured to emit a pulse corresponding to an incident photon;
a counter configured to count the number of pulses; and
a memory configured to store a count value of the counter;
one or more memories storing instructions; and
one or more processors executing the instructions to
generate a signal based on a difference in the count value of the counter between at a start timing and at an end timing of an accumulation period, and
output the signal generated in a first accumulation period between an end of the first accumulation period and an end of a second accumulation period, the first accumulation period and the second accumulation period being included in a full frame period, the first accumulation period being shorter than the second accumulation period.

2. The photoelectric conversion device according to claim 1, wherein the first accumulation period and the second accumulation period overlap each other.

3. The photoelectric conversion device according to claim 2, wherein the first accumulation period and the second accumulation period start at the same time.

4. The photoelectric conversion device according to claim 1, wherein an end timing of the second accumulation period matches an end timing of the full frame period.

5. The photoelectric conversion device according to claim 1, wherein the one or more processors further execute the instructions to recognize a subject based on at least the signal generated in the first accumulation period.

6. The photoelectric conversion device according to claim 5, wherein the one or more processors further execute the instructions to recognize the subject additionally based on the signal generated in the second accumulation period.

7. The photoelectric conversion device according to claim 1, wherein the one or more processors further execute the instructions to display at least the signal generated in the second accumulation period as an image.

8. The photoelectric conversion device according to claim 1, wherein the sensor portion includes an avalanche photodiode.

9. A movable apparatus comprising:
a plurality of pixels each including:
a sensor portion configured to emit a pulse corresponding to an incident photon;
a counter configured to count the number of pulses; and
a memory configured to store a count value of the counter;
one or more memories storing instructions; and
one or more processors executing the instructions to
generate a signal based on a difference in the count value of the counter between at a start timing and at an end timing of an accumulation period,
output the signal generated in a first accumulation period between an end of the first accumulation period and an end of a second accumulation period, the first accumulation period and the second accumulation period being included in a full frame period, the first accumulation period being shorter than the second accumulation period, and
control an operation of the movable apparatus.

10. A photoelectric conversion method of performing photoelectric conversion in a plurality of pixels each including a sensor portion configured to emit a pulse corresponding to an incident photon, a counter configured to count the number of pulses, and a memory configured to store a count value of the counter, the photoelectric conversion method comprising:
generating a signal based on a difference in the count value of the counter between at a start timing and at an end timing of an accumulation period; and
outputting the signal generated in a first accumulation period between an end of the first accumulation period and an end of a second accumulation period, the first accumulation period and the second accumulation period being included in a full frame period, the first accumulation period being shorter than the second accumulation period.

11. A non-transitory computer-readable storage medium configured to store a computer program comprising instructions for executing a photoelectric conversion process of performing photoelectric conversion in a plurality of pixels each including a sensor portion configured to emit a pulse corresponding to an incident photon, a counter configured to count the number of pulses, and a memory configured to store a count value of the counter, the photoelectric conversion process comprising:
generating a signal based on a difference in the count value of the counter between at a start timing and at an end timing of an accumulation period; and
outputting the signal generated in a first accumulation period between an end of the first accumulation period and an end of a second accumulation period, the first accumulation period and the second accumulation period being included in a full frame period, the first accumulation period being shorter than the second accumulation period.
